(19) Europäisches Patentamt
European Patent Office
Office européen des brevets

(11) **EP 4 318 676 A1**

(12) **EUROPEAN PATENT APPLICATION**
published in accordance with Art. 153(4) EPC


(43) Date of publication:
**07.02.2024 Bulletin 2024/06**

(21) Application number: **22775488.4**

(22) Date of filing: **18.03.2022**

(51) International Patent Classification (IPC):
***H01M 4/62** (2006.01)* ***C08G 73/10** (2006.01)*
***H01M 4/13** (2010.01)* ***H01M 4/134** (2010.01)*
***H01M 4/136** (2010.01)*

(52) Cooperative Patent Classification (CPC):
**C08G 73/10; H01M 4/13; H01M 4/134; H01M 4/136; H01M 4/62**

(86) International application number:
**PCT/JP2022/012788**

(87) International publication number:
**WO 2022/202701 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.03.2021 JP 2021047840**



(71) Applicants:
- **Wingo Technology Co., Ltd.**
  **Okayama-shi, Okayama 701-1221 (JP)**
- **DKS Co. Ltd.**
  **Kyoto-shi, Kyoto 600-8873 (JP)**

(72) Inventors:
- **GOSHIMA, Toshiyuki**
  **Okayama-shi, Okayama 701-1221 (JP)**
- **SOE, Win Maw**
  **Okayama-shi, Okayama 701-1221 (JP)**
- **HIBINO, Atsuhiko**
  **Kyoto-shi, Kyoto 600-8873 (JP)**
- **NAKAYAMA, Masashi**
  **Kyoto-shi, Kyoto 600-8873 (JP)**
- **HIGASHIZAKI, Tetsuya**
  **Kyoto-shi, Kyoto 600-8873 (JP)**

(74) Representative: **ABG Intellectual Property Law, S.L.**
**Avenida de Burgos, 16D**
**Edificio Euromor**
**28036 Madrid (ES)**


(54) **POLYIMIDE COMPOUND, NEGATIVE ELECTRODE MATERIAL FOR LITHIUM ION SECONDARY BATTERIES THAT USES SAID POLYIMIDE COMPOUND, NEGATIVE ELECTRODE FOR LITHIUM ION SECONDARY BATTERIES, AND LITHIUM ION SECONDARY BATTERY**


(57) A polyimide used as an electrode material capable of remarkably improving the cycle characteristics of a lithium-ion secondary battery is provided. The polyimide is a polyimide used as an electrode material for lithium-ion secondary batteries, in which a diamine component contains an aromatic diamine compound represented by the following Formula (1).

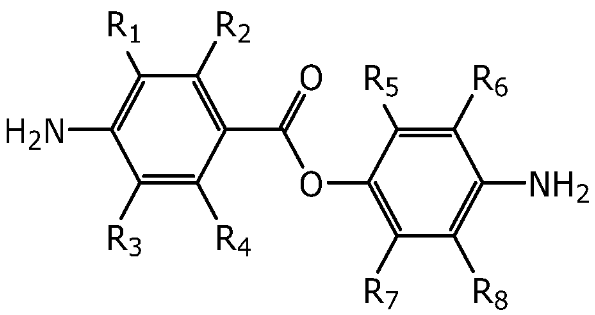

(1)


EP 4 318 676 A1

## Description

BACKGROUND OF THE INVENTION

Field of the Invention

The present invention relates to a polyimide used as an electrode material for lithium-ion secondary batteries.

Background Art

In recent years, the miniaturization of electronic devices such as smartphones has been rapidly progressing, and the development of lithium-ion secondary batteries that are small, lightweight, and capable of obtaining high energy density is being actively carried out.

Silicon (Si)-based materials, which have high discharged capacity, excellent initial charge/discharge efficiency, and cycle characteristics, are used as cathode active materials contained in lithium-ion secondary batteries. Meanwhile, silicon expands and shrinks significantly during charging and discharging, and its repeated use may cause disconnection of conductive paths between cathode active materials, the separation between the current collector and the cathode active material layer, and the like.

In view of the problems of the above-described silicon-based materials, the use of polyimide compounds as a material for cathode and as a binder resin has been investigated in place of conventionally used carboxymethyl cellulose and the like (see Patent Document 1).

However, there is room for improvement in the initial charge/discharge efficiency and cycle characteristics, and there has been a demand for a polyimide compound that can further improve the initial charge/discharge efficiency and cycle characteristics.

Citation List

Patent Document

[Patent Literature 1] WO2017/138604 A1

SUMMARY OF INVENTION

Technical Problem

The present invention has been made in view of the above-described problems. The solution to the problems is to provide a polyimide used as an electrode material capable of remarkably improving the cycle characteristics of a lithium-ion secondary battery.

In addition, an object of the present invention is to provide a lithium-ion secondary battery cathode material containing the polyimide, a cathode composed of the cathode material, and a lithium-ion secondary battery comprising the cathode.

Solution to Problem

The present inventors found that by using a specific aromatic diamine as the diamine component, electrode expansion can be suppressed, and cycle characteristics can be significantly improved even when a silicon-based cathode active material is used. The present invention is based on these findings. In other words, the gist of the present invention is as follows.

[1] A polyimide used as an electrode material for lithium-ion secondary batteries, comprising

a diamine component containing an aromatic diamine compound represented by the following Formula (1):

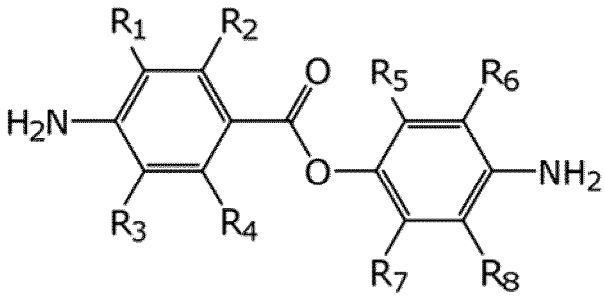

(1)

(where

$R_1$ to $R_4$ are hydrogen atoms, and

any of $R_5$ to $R_8$ is an aromatic group, a phenoxy group, a benzyl group, or a benzyloxy group having from 6 to 10 carbon atoms, and any of the remaining $R_5$ to $R_8$ is a hydrogen atom).

[2] The polyimide according to [1], wherein an acid anhydride component contains at least one of an alicyclic acid anhydride and an aromatic acid anhydride.

[3] The polyimide according to [1] or [2], wherein the compound of Formula (1) is contained at 20 mol% or more in the diamine component.

[4] A lithium-ion secondary battery cathode material, comprising the polyimide according to any one of [1] to [3] and a silicon-based cathode active material as a cathode active material.

[5] The cathode material according to [4], wherein the silicon-based cathode active material is contained at 30 parts by mass or more with respect to 100 parts by mass of the cathode active material.

[6] A lithium-ion secondary battery cathode, comprising a cathode current collector and a cathode active material layer formed on the cathode current collector, wherein

the cathode active material layer is composed of the cathode material according to [4] or [5].

[7] A lithium-ion secondary battery, comprising the cathode according to [6], an anode, and a non-aqueous electrolyte.

Advantageous Effects of Invention

By using the polyimide of the present invention as an electrode material for lithium-ion secondary batteries, electrode expansion can be suppressed, and cycle characteristics can be significantly improved even when a silicon-based cathode active material is used.

DETAILED DESCRIPTION OF THE INVENTION

[Definition]

In the present invention, "solvent-soluble" means that 5 g or more is dissolved in 100 g of an organic solvent.

In addition, "aromatic groups" include substituents that bind to the main skeleton via an oxygen atom, a nitrogen atom, or a carbon atom. Further, aromatic groups include heteroaromatic groups such as a pyrrole group.

[Polyimide]

The polyimide of the present invention is a reaction product of a diamine component containing an aromatic diamine compound represented by the following Formula (1) and an acid anhydride component:

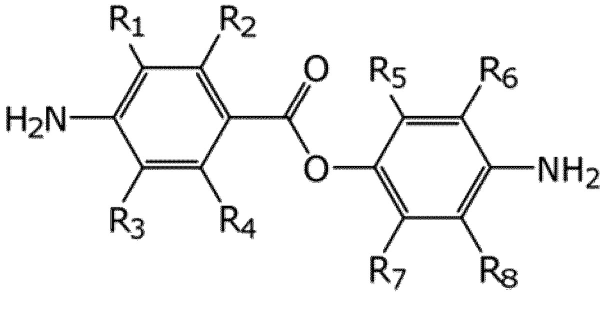

(1)

(where

$R_1$ to $R_4$ are hydrogen atoms, and
any of $R_5$ to $R_8$ is an aromatic group, a phenoxy group, a benzyl group, or a benzyloxy group having from 6 to 10 carbon atoms, and any of the remaining $R_5$ to $R_8$ is a hydrogen atom).

The aromatic group having from 6 to 10 carbon atoms is preferably unsubstituted from the viewpoint of the ease of synthesis and the application in the field of electronic component materials but may have a substituent. Examples of a substituent include an alkyl group, a halogen group such as a fluoro group or chloro group, an amino group, a nitro group, a hydroxyl group, a cyano group, a carboxyl group, and a sulfonic acid group. The alkyl group or aromatic group may have one, two, or more of these substituents.

Examples of the aromatic group having from 6 to 10 carbon atoms include heteroaromatic groups such as a phenyl group, a tolyl group, a methylphenyl group, a dimethylphenyl group, an ethylphenyl group, a diethylphenyl group, a propylphenyl group, a butylphenyl group, a fluorophenyl group, a pentafluorophenyl group, a chlorphenyl group, a bromophenyl group, a methoxyphenyl group, a dimethoxyphenyl group, an ethoxyphenyl group, a diethoxyphenyl group, an aminophenyl group, a nitrophenyl group, a nitrobenzyl group, a cyanophenyl group, a cyanobenzyl group, a phenethyl group, a phenylpropyl group, a phenylamino group, a diphenylamino group, a biphenyl group, a naphthyl group, a phenylnaphthyl group, a diphenylnaphthyl group, an anthryl group, an anthrylphenyl group, a phenylanthryl group, a naphthacenyl group, a phenanthryl group, a phenanthrylphenyl group, a phenylphenanthryl group, a pyrenyl group, a phenylpyrenyl group, a fluorenyl group, a phenylfluorenyl group, a naphthylethyl group, a naphthylpropyl group, an anthracenylethyl group, a phenanthrylethyl group, a pyrrole group, an imidazole group, a thiazole group, an oxazole group, a furan group, a thiophene group, a triazole group, a pyrazole group, an isooxazole group, an isothiazole group, a pyridine group, a pyrimidine group, a benzofuran group, a benzothiophene group, a quinoline group, an isoquinoline group, an indolyl group, a benzothiazolyl group, and a carbazolyl group.

Among the above-described aromatic groups, a phenyl group and a methylphenyl group are preferable from the viewpoint of the availability of starting materials and synthesis costs.

In addition, two or more of the aromatic diamine compounds represented by Formula (1) above may be used in combination.

Specifically, a compound represented by the following Formula (2) can be preferably used as the diamine compound satisfying Formula (1) above.

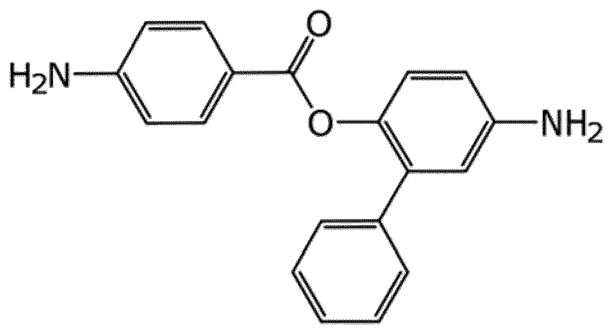

(2)

The aromatic diamine compound represented by Formula (1) above can be obtained by reacting a compound represented by the following Formula (3) with a compound represented by the following Formula (4) and then reducing the nitro group.

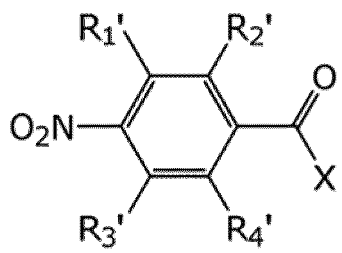

(3)

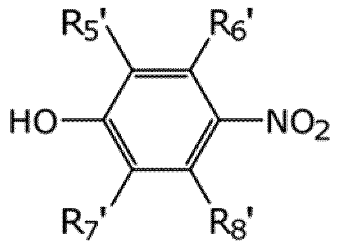

(4)

In the above-described formulas, $R_1$' to $R_4$' are hydrogen atoms, and any of $R_5$' to $R_8$' is an aromatic group, a phenoxy group, a benzyl group, or a benzyloxy group having from 6 to 10 carbon atoms, and any of the remaining $R_5$' to $R_8$' is a hydrogen atom.

In addition, X represents a hydroxyl group or a halogen group selected from a fluoro group, a chloro group, a bromo group, and an iodo group. From the viewpoint of reactivity with the compound represented by Formula (4), X is preferably a halogen group, particularly preferably a chloro group or a bromo group.

In the case of X being a hydroxyl group in Formula (3), it is preferable to carry out the reaction of the compounds represented by Formulas (3) and (4) in the presence of a dehydration condensation agent such as N,N'-dicyclohexylcarbodiimide (DCC) or an organic acid catalyst such as p-toluenesulfonic acid. In addition, in the case of X being a halogen group in Formula (3), it is preferable to carry out the reaction of the compounds represented by Formulas (3) and (4) in the presence of an acid acceptor such as triethylamine.

Specifically, the diamine compound represented by Formula (2) above can be obtained by reacting the compounds represented by the following Formulas (5) and (6).

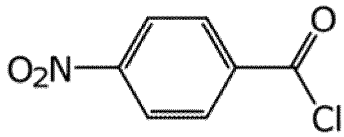

(5)

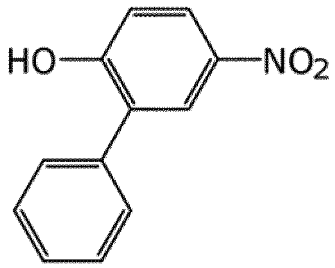

(6)

The compound represented by Formula (4) above can be obtained by nitrating a commercially available or synthesized compound represented by the following Formula (7). A compound represented by the following Formula (7) can be nitrated by conventionally known nitration methods using a mixed acid of concentrated sulfuric acid and concentrated nitric acid, nitric acid, fuming nitric acid, an acid alkali metal salt in concentrated sulfuric acid, acetyl nitrate, nitronium salts, nitrogen oxides, and the like.

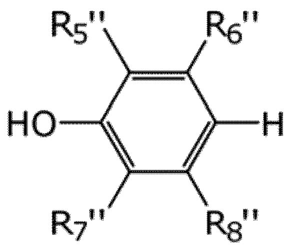

(7)

Any of $R_5$" to $R_8$" is an aromatic group, a phenoxy group, a benzyl group, or a benzyloxy group having from 6 to 10 carbon atoms, and any of the remaining $R_5$" to $R_8$" is a hydrogen atom.

According to the present invention, a diamine compound other than the above-described aromatic diamine compounds may be contained as the diamine component. Examples thereof include m-phenylenediamine, p-phenylenediamine, 2,4-diaminotoluene, 2,4(6)-diamino-3,5-diethyltoluene, 5(6)-amino-1,3,3-trimethyl-1-(4-aminophenyl)-indane, 4,4'-diamino-2,2'-dimethyl-1,1'-biphenyl, 4,4'-diamino-2,2'-ditrifluoromethyl-1,1'-biphenyl, 4,4'-diamino-3,3'-dimethyl-1,1'-biphenyl, 3,4'-diaminodiphenyl ether, 4,4'-diaminodiphenyl ether, 3,3'-diaminodiphenylsulfone, 4,4'-diaminodiphenylsulfone, 4,4'-diaminodiphenylsulfide, 4-aminophenyl-4-aminobenzoate, 4,4'-(9-fluorenylidene)dianiline, 9,9'-bis(3-methyl-4-aminophenyl)fluorene, 1,3-bis(3-aminophenoxy)benzene, 1,3-bis(4-aminophenoxy)benzene, 1,4-bis(4-aminophenoxy)benzene, 2,2-bis(4-aminophenyl) propane, 2,2-bis(3-methyl-4-aminophenyl)propane, 4,4'-(hexafluoroisopropylidene)dianiline, 2,2-bis(3-amino-4-methylphenyl)hexafluoropropane, 2,2-bis(3-methyl-4-aminophenyl) benzene, 2,2-bis[4-(4-aminophenoxy)phenyl] propane, 2,2-bis[4-(4-aminophenoxy)phenyl]hexafluoropropane, o,o-bis[4-(4-aminophenoxy)phenyl]-1,3-diisopropylbenzene, o,o-bis[4-(4-aminophenoxy)phenyl]-1,4-diisopropylbenzene, 3,7-diamino-dimethyldibenzothiophene, bis[4-(4-aminophenoxy)phenyl]sulfone, 5,5-dioxide, bis(3-carboxy-4-aminophenyl)methylene, 3,3'-diamino-4,4'-dihydroxy-1,1'-biphenyl, 4,4'-diamino-3,3'-dihydroxy-1,1'-biphenyl, 2,2-bis(3-amino-4-hydroxyphenyl)propane, 2,2-bis(3-amino-4-hydroxyphenyl)hexafluoropropane, 1,3-bis(3-hydroxy-4-aminophenoxy)benzene, 2,2-bis(3-hydroxy-4-aminophenyl) benzene, and 3,3'-diamino-4,4'-dihydroxydiphenylsulfone.

In a case in which the diamine components of the polyimide include an aromatic diamine represented by Formula (1) above and other diamines, considering the suppression of electrode expansion and the improvement of recycle characteristics, the aromatic diamine compound represented by Formula (1) above is contained at preferably 20 mol% or more, more preferably 50 mol% or more, with respect to the total of diamine compounds.

The acid anhydride constituting the polyimide of the present invention is not particularly limited, and various acid anhydrides used for polyimides can be used. Examples thereof include oxydiphthalic acid, pyromellitic dianhydride, 3-fluoropyromellitic dianhydride, 3,6-difluoropyromellitic dianhydride, 3,6-bis(trifluoromethyl)pyromellitic dianhydride, 1,2,3,4-benzene tetracarboxylic dianhydride, 2,2',3,3'-benzophenone tetracarboxylic dianhydride, 3,3',4,4'-benzophenone tetracarboxylic dianhydride, 3,3',4,4'-biphenyl tetracarboxylic dianhydride, 3,3',4,4'-biphenylsulfone tetracarboxylic dianhydride, 4,4'-(4,4'-isopropylidene diphenoxy)bisphthalic dianhydride, 2,3,3',4'-biphenyl tetracarboxylic dianhydride, 3,3",4,4"-terphenyl tetracarboxylic dianhydride, 3,3‴,4,4‴-quaterphenyl tetracarboxylic dianhydride, 2,2',3,3'-biphenyl tetracarboxylic dianhydride, methylene-4,4'-diphthalic dianhydride, 1,1-ethynylidene-4,4'-diphthalic dianhydride, 2,2-propylidene-4,4'-diphthalic dianhydride, 1,2-ethylene-4,4'-diphthalic dianhydride, 1,3-trimethylene-4,4'-diphthalic dianhydride, 1,4-tetramethylene-4,4'-diphthalic dianhydride, 1,5-pentamethylene-4,4'-diphthalic dianhydride, 1,3-bis[2-(3,4-dicarboxyphenyl)-2-propyl]benzene dianhydride, 1,4-bis[2-(3,4-dicarboxyphenyl)-2-propyl]benzene dianhydride, bis[3-(3,4-dicarboxyphenoxy)phenyl]methane dianhydride, bis[4-(3,4-dicarboxyphenoxy)phenyl]methane dianhydride, 2,2-bis[3-(3,4-dicarboxyphenoxy)phenyl]propane dianhydride, 2,2-bis[4-(3,4-dicarboxyphenoxy)phenyl]propane dianhydride, difluoromethylene-4,4'-diphthalic dianhydride, 1,1,2,2-tetrafluoro-1,2-ethylene-4,4'-diphthalic dianhydride, 3,3',4,4'-diphenylsulfone tetracarboxylic dianhydride, oxy-4,4'-diphthalic dianhydride, bis(3,4-dicarboxyphenyl)ether dianhydride, thio-4,4'-diphthalic dianhydride, sulfonyl-4,4'-diphthalic dianhydride, 1,3-bis(3,4-dicarboxyphenyl)benzene dianhydride, 1,4-bis(3,4-dicarboxyphenyl)benzene dianhydride, 1,3-bis(3,4-dicarboxyphenoxy)benzene dianhydride, 1,4-bis(3,4-dicarboxyphenoxy)benzene dianhydride, bis(3,4-dicarboxyphenoxy)dimethylsilane dianhydride, 1,3-bis(3,4-dicarboxyphenoxy)-1,1,3,3-tetramethyldisiloxane dianhydride, 2,3,6,7-naphthalene tetracarboxylic dianhydride, 1,2,5,6-naphthalene tetracarboxylic dianhydride, 3,4,9,10-perylene tetracarboxylic dianhydride, 2,3,6,7-anthracene tetracarboxylic dianhydride, 1,2,7,8-phenanthrene tetracarboxylic dianhydride, 1,2,3,4-butane tetracarboxylic dianhydride, 1,2,3,4-cyclobutane tetracarboxylic dianhydride, cyclopentane tetracarboxylic dianhydride, cyclohexane-1,2,3,4- tetracarboxylic dianhydride, cyclohexane-1,2,4,5-tetracarboxylic dianhydride, 3,3',4,4'-bicyclohexyl tetracarboxylic dianhydride, carbonyl-4,4'-bis(cyclohexane-1,2-dicarboxylic acid)dianhydride, methylene-4,4'-bis(cyclohexane-1,2-dicarboxylic acid)dianhydride, 1,2-ethylene-4,4'-bis(cyclohexane-1,2-dicarboxylic acid)dianhydride, oxy-4,4'-bis(cyclohexane-1,2-dicarboxylic acid)dianhydride, thio-4,4'-bis(cyclohexane-1,2-dicarboxylic acid)dianhydride, sulfonyl-4,4'-bis(cyclohexane-1,2-dicarboxylic acid)dianhydride, 3,3',5,5'-tetrakis(trifluoromethyl)oxy-4,4'-diphthalic dianhydride, 3,3',6,6'-tetrakis(trifluoromethyl)oxy-4,4'-diphthalic dianhydride, 5,5',6,6'-tetrakis(trifluoromethyl)oxy-4,4'-diphthalic dianhydride, 3,3',5,5',6,6'-hexakis(trifluoromethyl)oxy-4,4'-diphthalic dianhydride, 3,3'-difluorosulfonyl-4,4'-diphthalic dianhydride, 5,5'-difluorosulfonyl-4,4'-diphthalic dianhydride, 6,6'-difluorosulfonyl-4,4'-diphthalic dianhydride, 3,3',5,5',6,6'-hexafluorosulfonyl-4,4'-diphthalic dianhydride, 3,3'-bis(trifluoromethyl)sulfonyl-4,4'-diphthalic dianhydride, 5,5'-bis(trifluoromethyl)sulfonyl-4,4'-diphthalic dianhydride, 6,6'-bis(trifluoromethyl)sulfonyl-4,4'-diphthalic dianhydride, 3,3',5,5'-tetrakis(trifluoromethyl)sulfonyl-4,4'-diphthalic dianhydride, 3,3',6,6'-tetrakis(trifluoromethyl)sulfonyl-4,4'-diphthalic dianhydride, 5,5',6,6'-tetrakis(trifluoromethyl)sulfonyl-4,4'-diphthalic dianhydride, 3,3',5,5',6,6'-hexakis(trifluoromethyl)sulfonyl-4,4'-diphthalic dianhydride, 3,3'-difluoro-2,2-perfluoropropylidene-4,4'-diphthalic dianhydride, 5,5'-difluoro-2,2-perfluoropropylidene-4,4'-diphthalic dianhydride, 6,6'-difluoro-2,2-perfluoropropylidene-4,4'-diphthalic dianhydride, 3,3',5,5',6,6'-hexafluoro-2,2-perfluoropropylidene-4,4'-diphthalic dianhydride, 3,3'-bis(trifluoromethyl)-2,2-perfluoropropylidene-4,4'-diphthalic dianhydride, ethylene glycol bistrimellitate dianhydride, methyltetrahydrophthalic anhydride, methylhexahydrophthalic anhydride, methylhimic anhydride, hexahydrophthalic anhydride, tetrahydrophthalic anhydride, trialkyltetrahydrophthalic anhydride, methylcyclohexenedicarboxylic anhydride, bicyclo[2.2.2]oct-7-ene-2,3,5,6-tetracarboxylic dianhydride, bicyclo[2.2.2]octane-2,3,5,6- tetracarboxylic dianhydride, 3-(carboxymethyl)1,2,4-cyclopentanecarboxylic acid 1,4:2,3-dianhydride, 5-(2,5-dioxotetrahydrofuryl)-3-methyl-3-cyclohexene-1,2-dicarboxylic anhydride, 4-(2,5-dioxotetrahydrofuran-3-yl)-1,2,3,4-tetrahydronaphthalene-1,2-dicarboxylic anhydride, 5,5'-(1,4-phenylene)bis(hexahydro-4,7-methanoisobenzofuran-1,3-dione, and octahydro-3H,3"H-dispiro[4,7-methanoisobenzofuran-5,1'-cyclopentane-3',5"-[4,7]methanoisobenzofuran]-1,1",2',3,3"(4H,4"H)-pentaone. These may be used singly or in combination of two or more.

Among the acid anhydrides described above, alicyclic acid anhydrides and aromatic acid anhydrides can be preferably used from the viewpoint that the proportion of the aromatic diamine compound represented by Formula (1) in the diamine component of the polyimide can be increased.

The polyimide of the present invention can be obtained by reacting a diamine component containing an aromatic diamine compound represented by Formula (1) above with an acid anhydride component to obtain a polyamide acid, followed by a cyclization-dehydration reaction to convert the polyamide acid to a polyimide. Since the obtained polyimide is soluble in a solvent, it can be easily formed into a film by dissolving it in a suitable organic solvent to form a varnish.

Regarding the mixing ratio of the diamine component to the acid anhydride component, the total amount of the diamine component is preferably from 0.5 mol% to 1.5 mol%, more preferably from 0.9 mol% to 1.1 mol% with respect to a total acid anhydride amount of 1 mol%.

The reaction between the diamine component and the acid anhydride component is preferably carried out in an organic solvent. An organic solvent is not particularly limited as long as it does not react with the diamine compound and the acid anhydride and can dissolve the reaction product of the diamine compound and the acid anhydride. Examples thereof include N-methyl-2-pyrrolidone, N,N-dimethyl formamide, N,N-dimethyl acetamide, N,N'-dimethyl imidazolidinone, γ-butyrolactone, dimethyl sulfoxide, sulfolane, 1,3-dioxolane, tetrahydrofuran, ethylene glycol dimethyl ether, ethylene glycol diethyl ether, ethylene glycol dibutyl ether, diethylene glycol dimethyl ether, diethylene glycol diethyl ether, diethylene glycol methylethyl ether, dipropylene glycol dimethyl ether, diethylene glycol dibutyl ether, dibenzyl ether, methyl lactate, ethyl lactate, butyl lactate, methyl benzoate, ethyl benzoate, triglyme, tetraglyme, toluene, and xylene. From the viewpoint of the solubility of the diamine compound of Formula (1) above, N-methyl-2-pyrrolidone, N,N'-dimethylimidazolidinone, and γ-butyrolactone are preferred.

The reaction temperature between the diamine compound and the acid anhydride is preferably 40°C or less in the case of chemical imidization. In the case of thermal imidization, the temperature is preferably from 150°C to 220°C, more preferably from 170°C to 200°C.

An imidization catalyst may be used during the cyclization-dehydration reaction. Examples of an imidization catalyst that can be used include methylamine, ethylamine, trimethylamine, triethylamine, propylamine, tripropylamine, butylamine, tributylamine, tert-butylamine, hexylamine, triethanolamine, N,N-dimethylethanolamine, N,N-diethylethanolamine, triethylenediamine, N-methylpyrrolidine, N-ethylpyrrolidine, aniline, benzylamine, toluidine, trichloroaniline, pyridine, colligin, lutidine, picoline, quinoline, iso quinoline, and valerolactone. In addition, if necessary, azeotropic dehydrating agents such as toluene, xylene, and ethylcyclohexane, and acid catalysts such as acetic anhydride, propionic anhydride, butyric anhydride, and benzoic anhydride can be used.

Sealing agents such as benzoic acid, phthalic anhydride, and hydrogenated phthalic anhydride can be used in the reaction between the diamine compound and the acid anhydride.

In addition, a double bond or triple bond can also be introduced at the terminal of the polyimide compound by using maleic anhydride, ethynyl phthalic anhydride, methylethynyl phthalic anhydride, phenylethynyl phthalic anhydride, phenylethynyltrimellitic anhydride, 3- or 4- ethynylaniline, or the like.

[Lithium-ion Secondary Battery Cathode Material]

The above-described polyimide of the present invention can be preferable as a lithium-ion secondary battery cathode material (hereinafter sometimes simply referred to as "cathode material"), especially as a cathode binder component. In other words, a cathode material containing the above-described polyimide and cathode active material can be used as a binder.

The above-described polyimide may be used singly as a binder. Other resins may be contained in the binder; for example, polyvinylidene fluoride (PVDF) can be used. In addition, instead of PVDF, for example, a PVDF copolymer resin, a fluorine-based resin, a styrene-butadiene rubber (SBR), an ethylene-propylene rubber (EPDM), a styrene-acrylonitrile copolymer, or the like may be used as a binder. For example, hexafluoropropylene (HFP), perfluoromethyl vinyl ether (PFMV), or a copolymer resin of tetrafluoroethylene (TFE) and PVDF may be used as a PVDF copolymer resin. For example, polytetrafluoroethylene (PTFE), a fluorine rubber, or the like may be used as a fluorine-based resin. For example, polysaccharides such as carboxymethyl cellulose (CMC) and thermoplastic resins such as polyimide resins may be used as other binders. In addition, two or more of the above-described binders may be used in combination.

The content of the polyimide in the cathode material is preferably from 1% by mass to 20% by mass, more preferably from 3% by mass to 18% by mass. The cycle characteristics of the lithium-ion secondary battery can be further improved by setting the content of the polyimide in the cathode material within the above-described numerical range.

From the viewpoint of battery capacity, it is preferable to use a silicon-based material as the cathode active material. Examples of a silicon-based material include silicon particles, alloys of silicon with metals such as tin, nickel, iron, copper, silver, cobalt, manganese, and zinc, and compounds of silicon with boron, nitrogen, oxygen, carbon, and the like.

Examples of a silicon-based material include Si, SiO, $SiO_2$, $SiB_4$, $Mg_2Si$, $Ni_2Si$, $CoSi_2$, $NiSi_2$, $Cu_5Si$, $FeSi_2$, $MnSi_2$, $ZnSi_2$, SiC, $Si_3N_4$, and SizNzO, of which Si and SiO are particularly preferable.

Cathode active materials other than silicon-based materials may also be used. Examples thereof can include lithium metal, metal oxide, and graphite. In addition, two or more kinds of cathode active materials may be contained as cathode materials.

From the viewpoint of battery capacity, the above-described silicon-based cathode active material is contained at 30 parts by mass or more, more preferably 50 parts by mass or more, particularly preferably 95 parts by mass or more with respect to 100 parts by mass of cathode active materials.

In one embodiment, the cathode material may contain a conductive agent in addition to the above-described polyimide and cathode active material. Examples of a conductive agent include carbon black (such as acetylene black, ketjen black, or furnace black), graphite, carbon fibers, carbon flakes, metal fibers, and foils. Among these, carbon black is preferable, and acetylene black is more preferable. These conductive agents may be used singly or in combination of two or more.

The content of the conductive agent in the cathode material is preferably from 0.1% by mass to 25% by mass, more preferably from 1% by mass to 20% by mass in the entire cathode material. A favorable conductive path can be formed in the cathode active material layer by setting the content of the conductive agent within the above-described numerical range.

The cathode material may contain additives within the scope that does not impair the characteristics of the present invention. Examples thereof include a thickener and a filler.

[Lithium-ion Secondary Battery Cathode]

The lithium-ion secondary battery cathode of the present invention comprises a cathode current collector and a cathode active material layer formed on the cathode current collector, in which the cathode active material layer is composed of the above-described cathode material.

Examples of the current collector include, but are not particularly limited to, copper, nickel, stainless steel, gold, iron, aluminum and their alloys, nickel-plated steel, and chrome-plated steel.

The thickness of the cathode active material layer is preferably from 15 μm to 150 μm, more preferably from 20 μm to 120 μm. The Initial charge/discharge efficiency and cycle characteristics of the lithium-ion secondary battery can be further improved by setting the thickness of the cathode active material layer within the above-described numerical range.

The lithium-ion secondary battery cathode of the present invention can be produced by applying a solution prepared by dissolving or dispersing the above-described cathode material in an organic solvent onto a current collector and drying the solution.

The above-described organic solvents can be used herein. N-methyl-2-pyrrolidone, N,N'-dimethylimidazolidinone, and γ-butyrolactone are preferable from the viewpoint of solubility or dispersibility of a resin composition.

Examples of the coating method include, but are not particularly limited to, a die coater method, a three-roll transfer coater method, a doctor blade method, a dip method, a direct roll method, and a gravure method.

[Lithium-ion Secondary Battery]

The lithium-ion secondary battery of the present invention comprises the above-described cathode, anode, and non-aqueous electrolyte. In addition, in one embodiment, the lithium-ion secondary battery of the present invention comprises a separator disposed between the cathode and the anode.

As the anode, conventionally known anodes used for lithium-ion secondary batteries can be appropriately used. The anode can be produced by applying an anode-forming material onto a current collector and drying the material.

The anode-forming material contains an anode active material and a binder and may further contain the above-described conductive agent and additives.

Examples of the anode active material include lithium cobaltate, lithium nickelate, lithium manganate, and lithium iron phosphate.

As the binder, the above-described polyimide or binder used as a cathode material can be used.

In addition, lithium foil or the like can be used as the anode, which is not limited to the above.

A conventionally known separator can be used. Examples thereof include paper separators, resin separators such as polyethylene and polypropylene, and glass fiber separators.

The above-described anode and cathode are disposed in a battery container. The container is filled with an organic solvent in which the electrolyte has been dissolved. Examples of the electrolyte include, but are not particularly limited to, non-aqueous electrolytes such as $LiPF_6$, $LiClO_4$, $LiBF_4$, $LiClF_4$, $LiAsF_6$, $LiSbF_6$, $LiAlO_4$, $LiAlCl_4$, $CF_3SO_3Li$, $LiN(CF_3SO_2)_3$, LiCl, and LiI. Of these, $LiPF_6$, $LiClO_4$, and $CF_3SO_3Li$, which have high degrees of dissociation, are preferred.

Examples of the organic solvent include, but are not particularly limited to, carbonate compounds, lactone compounds, ether compounds, sulfolane compounds, dioxolane compounds, ketone compounds, nitrile compounds, and halogenated hydrocarbon compounds. Specific examples thereof can include: carbonates such as dimethyl carbonate, methyl ethyl carbonate, diethyl carbonate, ethylene carbonate, propylene carbonate, ethylene glycol dimethyl carbonate, propylene glycol dimethyl carbonate, ethylene glycol diethyl carbonate, vinylene carbonate; lactones such as γ-butyl lactone; ethers such as dimethoxyethane, tetrahydrofuran, 2-methyltetrahydrofuran, tetrahydropyran, and 1,4-dioxane; sulfolanes such as sulfolane and 3-methylsulfolane; dioxolanes such as 1,3-dioxolane; ketones such as 4-methyl-2-pentanone; nitriles such as acetonitrile, pyropionitrile, valeronitrile, and benzonitrile; halogenated hydrocarbons such as 1,2-dichloroethane; and other ionic liquids of methyl formate, dimethylformamide, diethylformamide, dimethylsulfoxide, imidazolium salt, quaternary ammonium salt, and the like. In addition, the organic solvent may be any combination of them.

Among the above-described organic solvents, a carbonate compound, which has low solubility in the polyimide used for the cathode and can suppress the swelling of the polyimide, can be preferably used.

The lithium-ion secondary battery can be formed into a cylindrical shape, a coin shape, a square shape, a laminate shape, or any other shape. The basic configuration of the battery is the same regardless of the shape and can be implemented by changing the design depending on the purpose. For example, a lithium-ion secondary battery having a cylindrical shape can be obtained by housing a wound body, in which a cathode formed by coating a cathode current collector with a cathode active material and an anode formed by coating an anode current collector with an anode active material are wound via a separator, in a battery can, injecting a non-aqueous electrolytic solution thereinto, place insulating plates on the top and bottom of the battery can, and sealing the battery can. In addition, in the case of the application of a lithium-ion secondary battery having a coin shape, a disk-shaped cathode, a separator, a disk-shaped anode, and a stainless steel plate are housed in the form of layers in a coin-type battery can, a non-aqueous electrolytic solution is injected into the battery can, and the battery can be sealed.

## EXAMPLES

The present invention will be described in more detail with reference to Examples below; however, the present invention is not limited to the examples. In the following description, "part(s)" and "%" are based on mass unless otherwise specified.

<Synthesis of Polyimide>

[Example 1]

A 500-mL separable flask equipped with a nitrogen inlet tube and a stirrer was charged with 64.88 g (150 mmol) of bis[4-(4-aminophenoxy)phenyl]sulfone (BAPS) as an aromatic diamine compound represented by the following corresponding formula, 15.22 g (50 mmol) of (2-phenyl-4-aminophenyl)-4-aminobenzoate (PHBAAB) as an aromatic diamine compound represented by the following corresponding formula, 62.04 g (200 mmol) of diphenyl-3,3',4,4'- tetracarboxylic dianhydride (ODPA) represented by the following corresponding formula, 868 g of N-methyl-2-pyrrolidone, 4.0 g (50 mmol) of pyridine, and 87 g of toluene, which were then reacted for 9 hours at 180°C under a nitrogen atmosphere, during which toluene was removed from the system. Thus, 15% by weight of a polyimide solution was obtained.

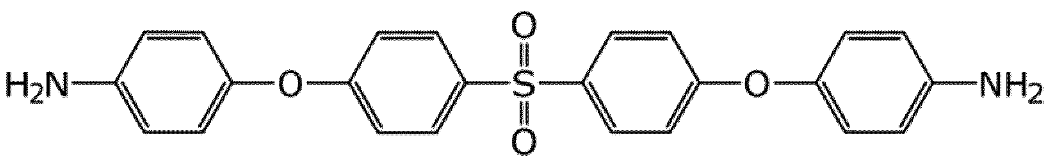

BAPS

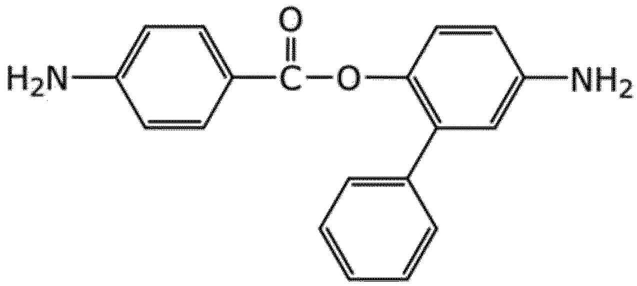

PHBAAB

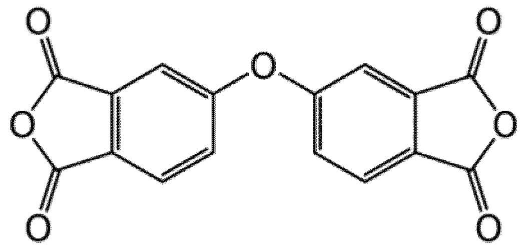

ODPA

[Example 2]

An apparatus the same as in Example 1 was charged with 3.25 g (100 mmol) of BAPS4, 30.44 g (100 mmol) of PHBAAB, 62.04 g (200 mmol) of ODPA, 868 g of N-methyl-2-pyrrolidone, 4.0 g (50 mmol) of pyridine, and 87 g of toluene, which were then reacted for 9 hours at 180°C under a nitrogen atmosphere, during which toluene was removed from the system. Thus, 15% by weight of a polyimide solution was obtained.

[Comparative Example 1]

An apparatus the same as in Example 1 was charged with 86.5 g (200 mmol) of BAPS, 62.04 g (200 mmol) of ODPA, 868 g of N-methyl-2-pyrrolidone, 4.0 g (50 mmol) of pyridine, and 87 g of toluene, which were then reacted for 9 hours at 180°C under a nitrogen atmosphere, during which toluene was removed from the system. Thus, 15% by weight of a polyimide solution was obtained.

[Example 3]

An apparatus the same as in Example 1 was charged with 43.26 g (200 mmol) of 4,4'-diaminodiphenylsulfide (ASD) as an aromatic diamine compound represented by the following corresponding formula, 60.87 g (200 mmol) of PHBAAB, 89.67 g (400 mmol) of 1,2,4,5-cyclohexane tetracarboxylic dianhydride (HPMDA) represented by the following corresponding formula, 538 g of N-methyl-2-pyrrolidone, 6.3 g (80 mmol) of pyridine, and 54 g of toluene, which were then reacted for 14 hours at 180°C under a nitrogen atmosphere, during which toluene was removed from the system. Thus, 25% by weight of a polyimide solution was obtained.

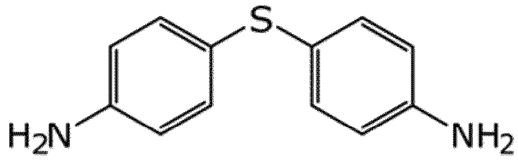

ASD

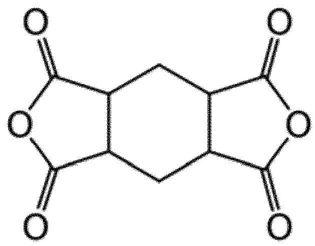

HPMDA

[Example 4]

An apparatus the same as in Example 1 was charged with 121.74 g (400 mmol) of PHBAAB, 89.67 g (400 mmol) of HPMDA, 591 g of N-methyl-2-pyrrolidone, 6.3 g (80 mmol) of pyridine, and 59 g of toluene, which were then reacted for 14 hours at 180°C under a nitrogen atmosphere, during which toluene was removed from the system. Thus, 25% by weight of a polyimide solution was obtained.

[Comparative Example 2]

An apparatus the same as in Example 1 was charged with 86.52 g (400 mmol) of ASD, 89.67 g (400 mmol) of HPMDA, 485 g of N-methyl-2-pyrrolidone, 6.3 g (80 mmol) of pyridine, and 49 g of toluene, which were then reacted for 14 hours at 180°C under a nitrogen atmosphere, during which toluene was removed from the system. Thus, 25% by weight of a polyimide solution was obtained.

[Example 5]

An apparatus the same as in Example 1 was charged with 40.05 g (200 mmol) of 4,4'-diaminodiphenyl ether (ODA) as an aromatic diamine compound represented by the following formula, 60.87 g (200 mmol) of PHBAAB, 124.09 g (400 mmol) of ODPA, 959 g of N-methyl-2-pyrrolidone, 6.3 g (80 mmol) of pyridine, and 96 g of toluene, which were then reacted for 7 hours at 180°C under a nitrogen atmosphere, during which toluene was removed from the system. Thus, 18% by weight of a polyimide solution was obtained.

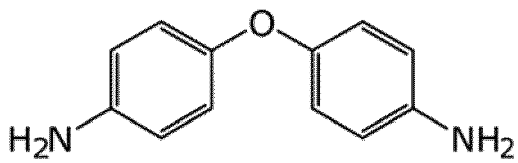

ODA

[Example 6]

An apparatus the same as in Example 1 was charged with 61.58 g (150 mmol) of 2,2-bis[4-(4-aminophenoxy)phenyl]propane (BAPP) as an aromatic diamine compound represented by the following formula, 45.65 g (150

mmol) of PHBAAB, 93.07 g (300 mmol) of ODPA, 863 g of N-methyl-2-pyrrolidone, 4.8 g (60 mmol) of pyridine, and 86 g of toluene, which were then reacted for 7 hours at 180°C under a nitrogen atmosphere, during which toluene was removed from the system. Thus, 18% by weight of a polyimide solution was obtained.

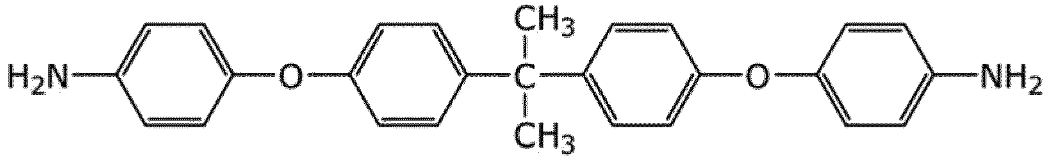

BAPP

[Example 7]

An apparatus the same as in Example 1 was charged with 20.02 g (100 mmol) of ODA, 41.05 g (100 mmol) of BAPP, 30.44 g (100 mmol) of PHBAAB, 93.07 g (300 mmol) of ODPA, 792 g of N-methyl-2-pyrrolidone, 4.8 g (60 mmol) of pyridine, and 79 g of toluene, which were then reacted for 7 hours at 180°C under a nitrogen atmosphere, during which toluene was removed from the system. Thus, 18% by weight of a polyimide solution was obtained.

[Example 8]

An apparatus the same as in Example 1 was charged with 64.87 g (150 mmol) of BAPS, 45.65 g (150 mmol) of PHBAAB, 46.53 g (150 mmol) of ODPA, 48.33 g (150 mmol) of 3,4,3',4'-benzophenone tetracarboxylic dianhydride (BTDA) represented by the following formula, 886 g of N-methyl-2-pyrrolidone, 4.8 g (60 mmol) of pyridine, and 89 g of toluene, which were then reacted for 4 hours at 180°C under a nitrogen atmosphere, during which toluene was removed from the system. Thus, 18% by weight of a polyimide solution was obtained.

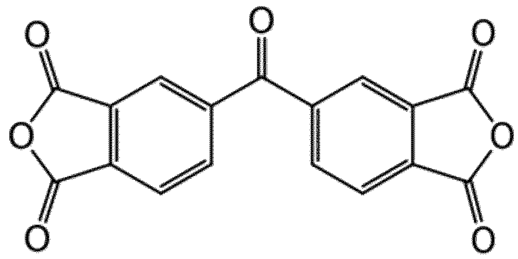

BTDA

<Measurement of Film Physical Properties>

Each of the polyimide solutions obtained in Examples 1 to 8 and Comparative Examples 1 and 2 was applied onto a 10-cm square glass plate by the spin coating method and dried at 100°C for 0.5 hours, at 200°C for 0.5 hours, and at 250°C for 1 hour. Thereafter, the resulting coating was peeled off from the glass plate and cut, thereby obtaining a test piece of 80 mm in length × 10 mm in width × 15 μm in thickness.

For each test piece thus obtained, the elastic modulus, tensile strength, and degree of elongation in the MD and TD directions were measured using a tensile tester (trade name: AG-Xplus 50 kN manufactured by SHIMADZU CORPORATION) at a tensile speed of 10 mm/min. An average value of the measured values in the MD and TD directions was calculated for the elastic modulus, tensile strength, and degree of elongation. The measurement results are shown in Table 1. Note that "Impossible to measure" in Examples 3 and 4 in Table 1 indicates that film physical properties could not be measured because it was not possible to successfully obtain a film composed of polyimide by the above-described method, by which a polyimide solution is applied to a glass plate to obtain a film composed of polyimide when preparing a test piece.

<Evaluation of Cycle Characteristics>

The obtained polyimide serving as a binder, silicon monoxide (SiO) and graphite serving as cathode active materials, and a conductive agent were mixed based on the following composition, thereby preparing a lithium-ion secondary battery cathode material 1.

| | |
|---|---|
| - Polyimide | 10.0% by mass |
| - Silicon monoxide | 52.2% by mass |
| - Graphite | 34.8% by mass |
| - Conductive agent | 3.00% by mass |

A cathode 1 was made by preparing an electrolytic copper foil having a thickness of 10 μm as a cathode current collector, coating a surface of the electrolytic copper foil with the cathode material 1 obtained as described above, and drying the coating to form a cathode active material layer having a thickness of 50 μm.

In addition, a lithium-ion secondary battery cathode material 2 was prepared in the same manner described above, except that the composition of the lithium-ion secondary battery cathode material 1 was changed to the following. The lithium-ion secondary battery cathode material 2 was used for preparing a cathode 2 in the same manner described above.

| | |
|---|---|
| - Polyimide | 10.0% by mass |
| - Silicon monoxide | 87.0% by mass |
| - Conductive agent | 3.00% by mass |

Further, a lithium-ion secondary battery cathode material 3 was prepared in the same manner described above, except that the composition of the lithium-ion secondary battery cathode material 1 was changed to the following.

| | |
|---|---|
| - Polyimide | 15.0% by mass |
| - Silicon | 80.0% by mass |
| - Conductive agent | 5.00% by mass |

A cathode 3 was made by preparing an electrolytic copper foil having a thickness of 10 μm as a cathode current collector, coating a surface of the electrolytic copper foil with the cathode material 3 obtained as described above, and drying the coating to form a cathode active material layer having a thickness of 25 μm.

A coin-cell-type lithium-ion secondary battery was made by preparing lithium foil as an anode, ethylene carbonate and ethylmethyl carbonate as electrolytic solutions, and a polyolefin-made monolayer separator (Celgard (registered trademark) 2500 manufactured by Celgard LLC) and using each of the cathodes obtained as described above.

Each lithium-ion secondary battery made as described above was allowed to stand still in an environment at 25°C for 24 hours. Thereafter, performance evaluation of the lithium-ion secondary battery was carried out as described below in an environment at 25°C.

A cycle of performing constant current (CC) charging up to 5 mV at a current density equivalent to 0.1 C, switching CC charging to constant voltage (CV) charging at 5 mV, performing charging up to a current density equivalent to 0.01 C, and then performing CC discharge to 1.2 V with a current density equivalent to 0.1 C was repeated twice (two cycles) at 25°C. The discharged capacity equivalent to 0.1 C at the 1st cycle is represented by A.

Subsequently, a cycle of performing constant current (CC) charging up to 5 mV at a current density equivalent to 0.2 C, switching CC charging to constant voltage (CV) charging at 5 mV, performing charging up to a current density equivalent to 0.02 C, and then performing CC discharge to 1.2 V with a current density equivalent to 0.2 C was repeated three times (three cycles) at 25°C. Then, a cycle of performing constant current (CC) charging up to 5 mV at a current density equivalent to 0.5 C, switching CC charging to constant voltage (CV) charging at 5 mV, performing charging up to a current density equivalent to 0.05 C, and then performing CC discharge to 1.2 V with a current density equivalent to 0.5 C was repeated 30 times (30 cycles) at 25°C. The discharged capacity equivalent to 0.5C at the 30th cycle is represented by B.

Cycle characteristics were calculated based on the following equation:

$$\Delta C\ (\%) = (B/A) \times 100.$$

The evaluation of cycle characteristics was as shown in Table 1 below.

In Table 1, "SiO 60%" indicates lithium-ion secondary battery cathode material 1 (the composition of the cathode active material containing 60% by mass of silicon monoxide), "SiO 100%" indicates lithium-ion secondary battery cathode material 2 (the composition of the cathode active material containing 100% by mass of silicon monoxide), and "Si 100%" indicates lithium-ion secondary battery cathode material 3 (the composition of the cathode active material containing 100% by mass of silicon).

Table 1

| | Diamine component (mol%) | | | | | Acid anhydride component (mol%) | | | Film physical properties | | | Cycle retention rate | | |
|---|---|---|---|---|---|---|---|---|---|---|---|---|---|---|
| | Aromatic | | | | | Aromatic | | Alicyclic | Tensile strength (MPa) | Tensile modulus (GPa) | Degree of elongation (%) | SiO 60% (%) | SiO 100% (%) | Si 100% (%) |
| | PHBAAB | BAPS | ASD | ODA | BAPP | ODPA | BTDA | HPMDA | | | | | | |
| Example 1 | 25 | 75 | - | - | - | 100 | - | - | 99 | 3.1 | 15 | - | 34 | - |
| Example 2 | 50 | 50 | - | - | - | 100 | - | - | 132 | 3.7 | 32 | 86 | 65 | 91 |
| Comparative Example 1 | - | 100 | - | - | - | 100 | - | - | 118 | 3.1 | 27 | 71 | 16 | - |
| Example 3 | 50 | - | 50 | - | - | - | - | 100 | Impossible to measure | Impossible to measure | Impossible to measure | - | 57 | - |
| Example 4 | 100 | - | - | - | - | - | - | 100 | Impossible to measure | Impossible to measure | Impossible to measure | - | 53 | - |
| Comparative Example 2 | - | - | 100 | - | - | - | - | 100 | 23 | 3.0 | 3 | - | 36 | - |
| Example 5 | 50 | - | - | 50 | - | 100 | - | - | 178 | 3.6 | 57 | - | - | 91 |
| Example 6 | 50 | - | - | - | 50 | 100 | - | - | 108 | 3.2 | 28 | - | - | 80 |
| Example 7 | 33.3 | - | - | 33.3 | 33.3 | 100 | - | - | 114 | 3.2 | 37 | - | - | 86 |
| Example 8 | 50 | 50 | - | - | - | 50 | 50 | - | 130 | 3.7 | 53 | - | - | 90 |

## Claims

1. A polyimide used as an electrode material for lithium-ion secondary batteries, comprising

   a diamine component containing an aromatic diamine compound represented by the following Formula (1):

   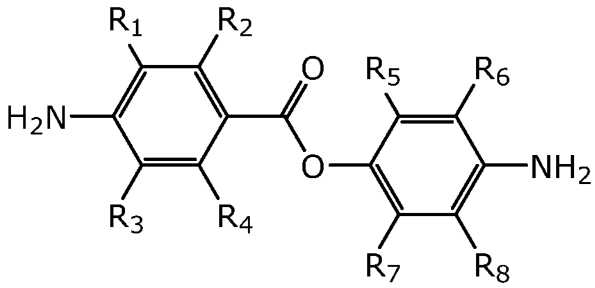

   (1)

   (where
   $R_1$ to $R_4$ are hydrogen atoms, and
   any of $R_5$ to $R_8$ is an aromatic group, a phenoxy group, a benzyl group, or a benzyloxy group having from 6 to 10 carbon atoms, and any of the remaining $R_5$ to $R_8$ is a hydrogen atom).

2. The polyimide according to claim 1, wherein an acid anhydride component contains at least one of an alicyclic acid anhydride and an aromatic acid anhydride.

3. The polyimide according to claim 1 or 2, wherein the compound of Formula (1) is contained at 20 mol% or more in the diamine component.

4. A lithium-ion secondary battery cathode material, comprising the polyimide according to any one of claims 1 to 3 and a silicon-based cathode active material as a cathode active material.

5. The cathode material according to claim 4, wherein the silicon-based cathode active material is contained at 30 parts by mass or more with respect to 100 parts by mass of the cathode active material.

6. A lithium-ion secondary battery cathode, comprising a cathode current collector and a cathode active material layer formed on the cathode current collector, wherein
   the cathode active material layer is composed of the cathode material according to claim 4 or 5.

7. A lithium-ion secondary battery, comprising the cathode according to claim 6, an anode, and a non-aqueous electrolyte.

## INTERNATIONAL SEARCH REPORT

International application No.
**PCT/JP2022/012788**

**A. CLASSIFICATION OF SUBJECT MATTER**

***H01M 4/62***(2006.01)i; ***C08G 73/10***(2006.01)i; ***H01M 4/13***(2010.01)i; ***H01M 4/134***(2010.01)i; ***H01M 4/136***(2010.01)i
FI: H01M4/62 Z; H01M4/134; H01M4/13; H01M4/136; C08G73/10

According to International Patent Classification (IPC) or to both national classification and IPC

**B. FIELDS SEARCHED**

Minimum documentation searched (classification system followed by classification symbols)

H01M4/62; C08G73/10; H01M4/13; H01M4/134; H01M4/136

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2013-77498 A (NIPPON ZEON CO LTD) 25 April 2013 (2013-04-25) paragraph [0094] | 1-7 |
| A | JP 6240799 B1 (WINGO TECHNOLOGY CO., LTD.) 29 November 2017 (2017-11-29) | 1-7 |
| P, X | WO 2021/053800 A1 (WINGO TECHNOLOGY CO., LTD.) 25 March 2021 (2021-03-25) claims | 1-7 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/012788**

| Patent document cited in search report | Publication date (day/month/year) | Patent family member(s) | Publication date (day/month/year) |
|---|---|---|---|
| JP 2013-77498 A | 25 April 2013 | (Family: none) | |
| JP 6240799 B1 | 29 November 2017 | US 2019/0389795 A1 | |
| | | WO 2018/139311 A1 | |
| | | EP 3575281 A1 | |
| | | KR 10-2018-0099863 A | |
| | | TW 201833074 A | |
| | | CN 110198926 A | |
| WO 2021/053800 A1 | 25 March 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017138604 A1